Europäisches Patentamt

European Patent Office

Office européen des brevets

(11) Publication number: **0 223 309**
**A1**

(12) **EUROPEAN PATENT APPLICATION**

(21) Application number: **86202023.7**

(22) Date of filing: **17.11.86**

(51) Int. Cl.⁴: **G 09 G 3/36, H 04 N 3/12**

(30) Priority: **19.11.85 NL 8503180**

(43) Date of publication of application: **27.05.87 Bulletin 87/22**

(84) Designated Contracting States: **CH DE FR GB LI NL SE**

(71) Applicant: **N.V. Philips' Gloeilampenfabrieken, Groenewoudseweg 1, NL-5621 BA Eindhoven (NL)**

(72) Inventor: **Brändli, Gerold Bruno, c/o INT. OCTROOIBUREAU B.V. Prof. Holstlaan 6, NL-5656 AA Eindhoven (NL)**

(74) Representative: **Raap, Adriaan Yde et al, INTERNATIONAAL OCTROOIBUREAU B.V. Prof. Holstlaan 6, NL-5656 AA Eindhoven (NL)**

(54) Display device.

(57) In a liquid crystal display device the drive matrix is extended up to the edge of the (visible part of the) liquid crystalline surface. Since only two visible conditions (on/off) are possible, which are identically driven everywhere, contrast differences between the edge (background) and parts of the actual display portion are eliminated.

EP 0 223 309 A1

0 223 309

"Display device".

The invention relates to a display device comprising an electric-optical medium between two support plates spaced at a distance from each other and having surfaces facing each other, a first set of electrodes being provided on one surface and a second set of electrodes being provided on the other surface, the electrodes of both sets crossing each other at least one support plate and the electrodes provided thereon being transparent, and electro-optical display cells which can be switched between an on and an off-condition being defined at the area of the points of crossing.

The invention also relates to an integrated circuit for controlling a display device of this type.

These display devices are suitable for displaying alpha-numerical characters and, for example, video information by means of passive electro-optical media, notably liquid crystals. The display device may be realised both as a transmissive and as a reflective device and may be furthermore provided with polarisers, dependent on its use.

Notably in matrix displays having a large number of selection lines solutions have been proposed enabling the multiplexing of a large number of lines such as, for example, the RMS drive mode according to Alt & Pleshko (IEEE, Trans. El. Dev. Vol. ED 21, 1974, pages 146-155). With an increasing number of selection lines the effective on and off-voltages across the display cells are to be selected as closely as possible to the range of transition in the transmission characteristic.curve. If, however, the voltage transmission characteristic curve of, for example, a liquid crystal is not entirely ideal, it will have a transmission value at the off-voltage which is different from that at the voltage 0 V. As a result contrast differences may arise, for example, between the actual display portion and an encircling edge or background. In the case of inverse drive this means that the background (edge) is continuously at an on-voltage, whereas the voltages used for information display differ to such an extent that such contrast differences occur.

In displays having a low number of selection lines the said problem has been largely solved by selecting the off-voltage to be as closely as possible to 0 V.

However, in matrix displays the off-voltage is selected to be as closely as possible to the threshold voltage of the voltage transmission characteristic curve as described above in connection with the large number of lines to be multiplexed.

It is an object of the invention to largely eliminate these problems, notably for matrix displays.

To this end a display device according to the invention is characterized in that the display device comprises a drive circuit which drives at least one extreme electrode of at least one set of electrodes in such a manner that the display cells associated with said electrode are continuously in the on or off-condition during operation.

The invention is based on the recognition that optical contrast differences can be avoided by operating possibly visible portions of the edge (background) with the same on and off-voltages as those which are used for the actual display portion.

At least one extreme electrode is to be understood to mean that one or more electrodes at one end of the visible portion are driven in such a manner that the associated display cells are continuously in the on or off-condition, dependent on the electro-optical medium used and on the drive mode (direct or inverse). In the case of a matrix display an electrode can be driven in this manner at both ends.

The device has the advantage that in the visible portion only two optical conditions occur instead of three so that no contrast differences occur between display cells operated with the off-voltage and display cells operated with voltage 0 V.

In a preferred embodiment at least the two extreme electrodes of the two sets of electrodes are continuously in the on or off-condition. The entire edge of the display then has the same optical behaviour as the actual display portion.

The picture surface determined by the extreme electrodes may coincide, if desired, with a light-permeable window which may or may not form part of a support plate. In order to alleviate the requirements with respect to mutual tolerances during assembly, at least two extreme electrodes may be mutually through-connected. These electrodes may then be driven in common.

The same advantage can be achieved by selecting the dimensions of the light-permeable window to be smaller than those determined by the extreme electrodes.

It is to be noted that the use of extreme electrodes is known per se from EP-A-0,123,568. However, they are not used to avoid optical contrast differences, but they supply voltages to compensate for parasitic voltages at other (column) electrodes. The compensation voltage is not constant but is dependent on the algebraic sum of the parasitic voltages at other column electrodes. In addition only extreme column electrodes are used for this purpose, whereas in the device according to the invention optical contrast differences are eliminated with fixed voltages (which, it is true, peridiocally reverse sign) at additional extreme row electrodes while in addition extreme column electrodes are used.

The invention will now be further described with reference to an embodiment and the drawing in which:

Fig. 1 diagrammatically shows a voltage transmission characteristic curve of a liquid crystal,

Fig. 2 diagrammatically and partly shows in a plan view a matrix display device realised therewith, while

Fig. 3 shows part of the matrix and figs. 4a to 4f show the associated drive voltages.

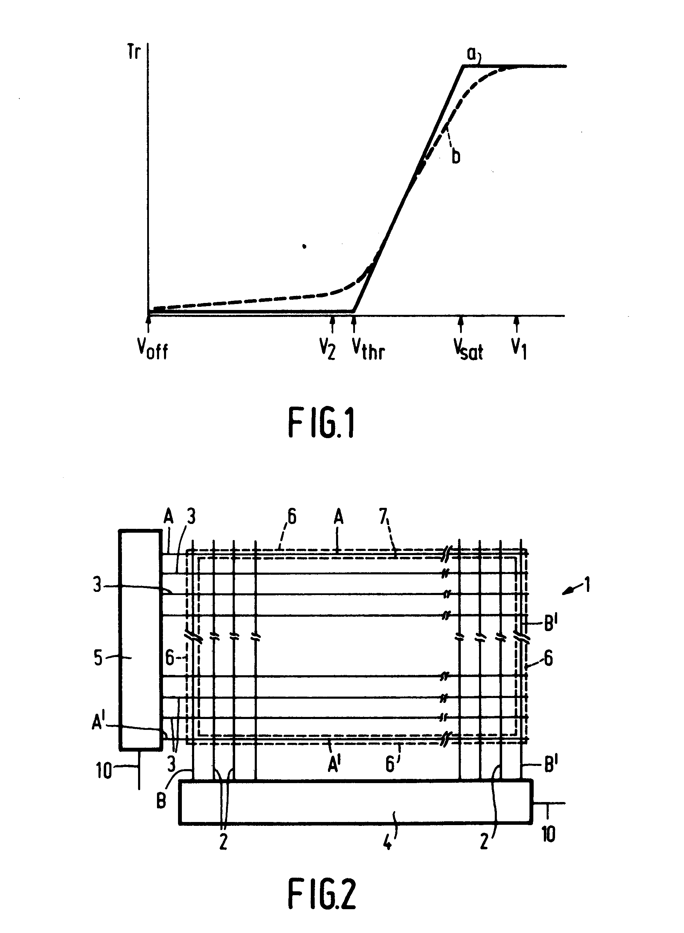

Fig. 1 diagrammatically shows the voltage transmission characteristic curve of an electro-optical medium, in this example a liquid crystal. In the ideal case (curve a) the liquid crystal is substantially opaque until at a threshold voltage $V_{thr}$ the transmission value increases to substantially 1 at a saturation voltage $V_{sat}$. In the RMS multiplex drive mode according to Alt & Pleshko on and off-voltages $V_1$ and $V_2$ are selected which are as closely as possible to $V_{sat}$ and $V_{thr}$, respectively, when operating a liquid crystal display device. In fact, the ratio $V_1/V_2$ determines the number of selection lines which can be driven by means of this method; this number is larger as $V_1/V_2$ is closer to 1.

However, problems may occur in practice because the voltage transmission characteristic curve does not vary ideally (curve b). For example, the voltage $V_1$ (off-voltage) at which a higher transmission occurs than at voltage 0 is then present across non-selected picture elements (display cells). If parts of the liquid crystal are visible, for example, along the edges which are not driven by means of the electrodes, a difference in transmission (contrast) occurs between these parts and picture elements which are driven with voltage $V_1$, whereas the off-condition should apply to both.

Fig. 2 diagrammatically shows a device according to the invention in which this contrast does not occur. The display device 1 comprises a liquid crystal which is driven via a drive matrix with columns 2 and rows 3. The columns 2, via which in this example data voltages are presented, are driven from a drive unit via, for example, a data register 4, while the rows or selection lines 3 are driven via a multiplex circuit 5.

According to the invention the display does not only comprise the columns 2 and the rows 3, but also additional electrodes at at least one end of the columns or rows. In this example the display device 1 comprises both additional row electrodes A, A' and column electrodes B, B' which in a plan view substantially coincide with the edge of a light-permeable window indicated by the broken line 6. This provides the advantage that all display cells are now driven with the voltages $V_1$ and $V_2$ and that at least in the visible portion there are no parts without any drive voltage so that there is no contrast between non-driven parts and picture elements driven with $V_2$.

The electrodes A, A', B, B' may be chosen to be slightly wider than the other electrodes 2, 3 which, from an assembly-technical point of view, provides advantages in connection with mutual tolerances between the dimensions of the matrix and the window. Such tolerance problems may also be solved advantageously by choosing the dimensions of the window to be such that, viewed in a perpendicular projection, the electrodes A, A', B, B' are entirely outside the window. The edge of such a window is shown in Fig. 2 by means of the broken line 7. The window may be provided in a wall of an envelope provided on a transparent support plate, but may alternatively form part of the transparent support plate.

On the other hand the occurrence of parts without any drive voltage may be avoided by causing the extreme electrodes A, A', B, B' to coincide with the edges of the actual liquid crystal.

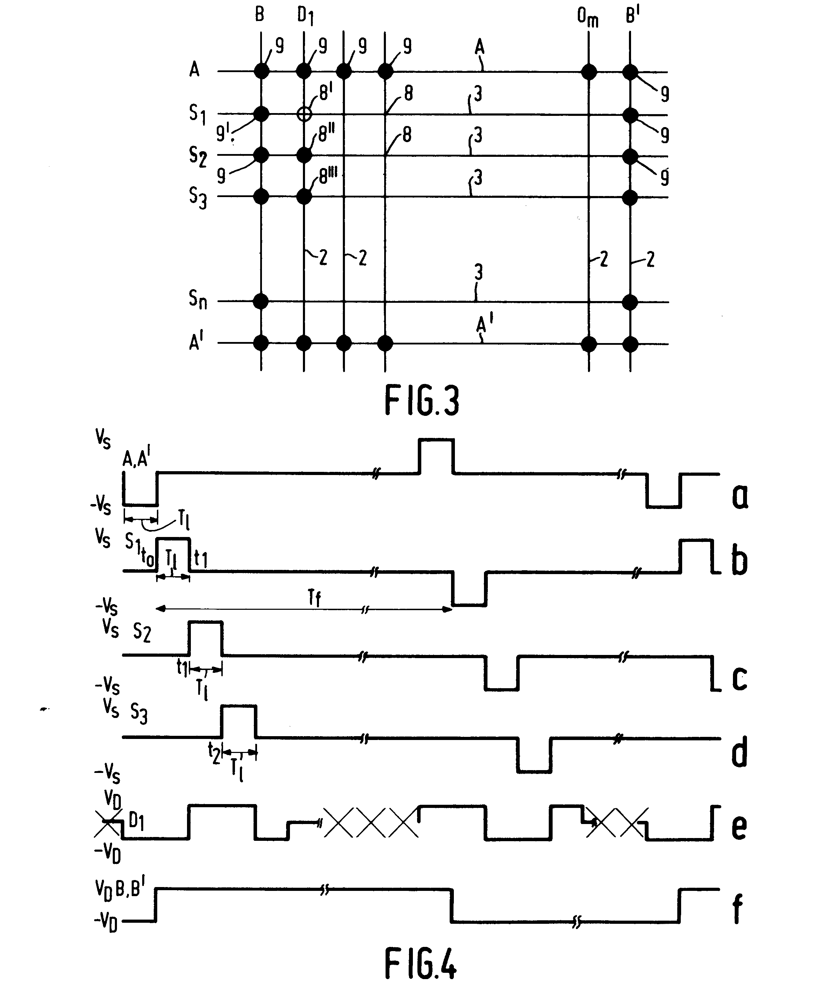

Fig. 3 diagrammatically shows part of the matrix of Fig. 2, while Figs. 4a through 4f show the associated drive signals. From the instant $t_o$ (Fig. 4b) the selection line $S_1$ is brought to a voltage $V_s$ during a line time $T_1$. Dependent on the voltages ($\pm V_D$) on the data lines $D_1 \ldots D_m$ (Fig. 4a) a voltage ($V_s+V_D$) or ($V_s - V_D$) is present across the display cells at the points of intersection 8. The voltage ($V_s+V_D$) is sufficiently high to bring the display cells into the on-condition, whereas ($V_s-V_D$) is so low that no transmission occurs. A voltage $-V_D$ is present on the data line $D_1$, in other words the voltage across the display cell at the area of 8' is ($V_s+V_D$) so that this display cell becomes light permeable. Likewise

the selection line $S_2$ is at voltage $+V_s$ during a line time $T_1$ from the instant $t_1$ (Fig. 4c), whereas data line $D_1$ has a voltage $+V_D$. At the area of the point of intersection 8" the voltage difference is $(V_s-V_D)$ so that no transmission occurs. A similar reasoning applies to the point of intersection 8", which is driven from $t_2$ by $S_3$ and $D_1$ (Figs. 4d, 4e).

The extreme selection lines (row electrodes) A, A' are at a voltage $-V_s$ (Fig. 4a) preceding $t_o$ during a period $T_L$, whereas the data lines $D_1 \ldots D_m$ are at a voltage $-V_D$ as well as the extreme column electrodes B, B' (Figs. 4e, 4f). This means that the voltage across the display cells at the area of the points of intersection 9 located on the lines A, A' is $(V_s-V_D)$ so that all display cells driven by the lines A, A' carry this voltage during a time $T_1$. Therefore there is no transmission at any of these points of intersection, while the drive is identical to that for points of intersection 8.

The extreme electrodes B, B' are at a voltage $V_D$ (Fig. 4f) during a complete frame time $T_f$. During the selection of $S_1$ a voltage $(V_s-V_D)$ is then present across the display cell during a line time $T_1$ at the point of intersection 9' of the line $S_1$ and the extreme columns B, B'. The same applies to other points of intersection 9 of the lines $S_i$ and the columns B, B'. The display cells associated therewith are thus likewise driven as those associated with the lines A, A'. After a frame time $T_f$ all signals are repeated in the case of equal information at $D_1 \ldots D_m$, be it with an inverse polarity.

In the case of inverse drive this means that the entire edge (background) remains light with the same brightness level as that of the light parts within the actual display portion.

In this manner the edge portion of a display device remains dark (or light) with the aid of the same drive voltages which are also used for the actual display portion. A possible contrast between this display portion and the edge is thus prevented.

The principle of the invention is of course also applicable to liquid crystals which are light permeable at voltage 0. Here, too, possible differences in transmission between a voltageless condition and a voltage condition with a slightly lower transmission are eliminated by not using, at least in the visible portion, the voltageless condition during operation.

With reference to the drive circuits 4, 5 it is to be noted that integrated circuits which are identical can be used. This circuit is then realised with the aid of, inter alia, a shift register having parallel and series inputs. Furthermore it may comprise level shifters and output amplifiers for obtaining LCD-compatible output voltages and the required input and clock circuits.

It is now determined by means of a function selection input 10 whether the circuit serves as a data register 4 or as a multiplex circuit 5. In the former case the circuit a plurality of which can be arranged in parallel supplies a data voltage from at least one output during one frame time for the extreme electrodes B, B' as described with reference to Fig. 4. This is effected, for example, by separately driving the associated part of the (internal) data register. The actual data may be read in parallel or serially.

When the circuit is used as a multiplex circuit the register 4 is, for example, entirely used as a shift register; with a drive clock present in the circuit for example, a logic 1 is shifted after each line time $T_1$ which brings about a voltage $V_s$ on line $S_1$ via possible amplifier circuits and a level shifter from $t_o$ to $t_1$, a voltage $V_s$ on row $S_2$ from $t_1$ to $t_2$, etc. To increase the number of drive lines a plurality of these circuit may be arranged serially.

1.   A display device comprising an electro-optical medium between two support plates spaced at a distance from each other and having surfaces facing each other, a first set of electrodes being provided on one surface and a second set of electrodes being provided on the other surface the electrodes of each set crossing each other, at least one support plate and the electrodes provided thereon being transparent, and electro-optical display cells which can be switched between an on and an off-condition being defined at the area of the points of crossing, characterized in that the display device comprises a drive circuit which drives at least one extreme electrode of at least one set of electrodes in such a manner that the display cells associated with said electrode are continuously in the on or off-condition during operation.

2.  A display device as claimed in Claim 1, characterized in that the first and second sets of electrodes comprise a plurality of parallel strip-shaped electrodes defining a matrix of display cells.

3.  A display device as claimed in Claim 1 or 2, characterized in that at least the two extreme electrodes of the two sets of electrodes are continuously in the on- or off-condition.

4.  A display device as claimed in Claim 2 or 3, characterized in that the extreme electrodes of the matrix substantially coincide with the edges of the liquid crystal surface.

5.  A display device as claimed in anyone of Claims 1 to 3, characterized in that the device comprises a light-permeable window at least one edge of which, viewed in a perpendicular projection, substantially coincides with an electrode of a set of electrodes.

6.      A display device as claimed in Claim 5, characterized in that the edges of the light-permeable window, viewed in a perpendicular projection, substantially coincide with the extreme electrodes of the first and second sets of electrodes.

7.      A display device as claimed in any one of Claims 1 to 3, characterized in that the device comprises a light-permeable window in which, viewed in a perpendicular projection, the extreme electrodes are located outside the light-permeable window.

8.      A display device as claimed in any one of Claims 5 to 7, characterized in that the support plate comprises the light-permeable window.

9.      A display device as claimed in any one of the preceding Claims, characterized in that at least two extreme electrodes of at least one set of electrodes are mutually connected in an electrically conducting manner.

10.      A display device as claimed in any one of the preceding Claims, characterized in that the electro-optical medium is a liquid crystal line medium.

11.      A display device as claimed in any one of Claims 1 to 10, characterized in that it comprises one or more identical integrated circuits both for column drive and for row drive.

12.      An integrated circuit for use in a display device as claimed in Claim 11, characterized in that the integrated circuit can be operated in a multiplex function in which dependent on an internal clock drive a selection voltage is generated successively on various outputs of a first number of outputs, and in a data function in which a data voltage independent of the other output voltages generated by the circuit is generated at at least one output of the first number of outputs.

FIG.1

FIG.2

0 223 309

FIG.3

FIG.4

## DOCUMENTS CONSIDERED TO BE RELEVANT

| Category | Citation of document with indication. where appropriate, of relevant passages | Relevant to claim | CLASSIFICATION OF THE APPLICATION (Int Cl.⁴) |
|---|---|---|---|
| A | FR-A-2 443 699 (K.K. DAINI SEIKOSHA) <br> * Page 11, claims 1,4 * <br> --- | 1 | G 09 G 3/36 <br> H 04 N 3/12 |
| D,A | EP-A-0 123 568 (COMMISSARIAT A L'ENERGIE ATOMIQUE) <br> ----- | | |

TECHNICAL FIELDS
SEARCHED (Int. Cl.⁴)

G 09 G 3/36
H 04 N 3/12
G 02 F 1/133
H 04 N 9/12

The present search report has been drawn up for all claims

| Place of search | Date of completion of the search | Examiner |
|---|---|---|
| THE HAGUE | 26-02-1987 | SIX G.E.E. |